# EUROPÄISCHE PATENTSCHRIFT

(11) **EP 3 476 075 B1**
(45) Veröffentlichungstag und Bekanntmachung des Hinweises auf die Patenterteilung: **09.09.2020**
(21) Anmeldenummer: 18737930.0
(22) Anmeldetag: 15.07.2018
(51) Int. Cl.: H04L 5/00

(54) **SENDER, VERFAHREN, VORRICHTUNG, EMPFÄNGER UND COMPUTERPRODUKT ZUM DRAHTLOSEN SENDEN VON ZUSATZINFORMATIONSSIGNALEN**
TRANSMITTER, METHOD, RECEIVER AND COMPUTER PRODUCT FOR THE WIRELESS TRANSMISSION OF SIGNALS WITH ADDITIONAL INFORMATION
ÉMETTEUR, MÉTHODE, RÉCEPTEUR ET PRODUIT D'ORDINATEUR POUR LA TRANSMISSION SANS FILS DE SIGNAUX AVEC INFORMATION SUPPLEMENTAIRE

(30) Priorität: 19.07.2017 IT 201700082050
(43) Veröffentlichungstag der Anmeldung: 01.05.2019
(73) Patentinhaber: Institut für Rundfunktechnik GmbH, 80939 München (DE)
(72) Erfinder: KUNERT, Clemens, 80939 München (DE); SIEBER, Andreas, 80939 München (DE); LIPFERT, Hermann, 80939 München (DE); PETERSEN, Swen, 80939 München (DE)
(74) Vertreter: Koplin, Moritz
(86) Internationale Anmeldenummer: PCT/EP2018/069183
(87) Internationale Veröffentlichungsnummer: WO 2019/016108

(56) Entgegenhaltungen:
- US-A1- 2014 355 626

## Beschreibung

Die vorliegende Erfindung betrifft einen Sender, ein Verfahren, eine Vorrichtung, einen Empfänger und ein Computerprodukt zum drahtlosen Senden und Empfangen von Zusatzinformationssignalen innerhalb eines Schutzintervalls eines weiteren drahtlos übertragenen Primärinformationssignals.

Das drahtlose Senden von Informationssignalen ist aus dem Stand der Technik bekannt. Weiter ist bekannt, dass bei dem drahtlosen Senden von Informationssignalen Schutzintervalle verwendet werden, um negativen Einflüssen auf die Empfangsqualität von Informationssignalen an Empfängern, insbesondere verursacht durch Interferenzen, Reflektionen, Echophänomene bedingt durch Laufzeitunterschiede beim drahtlosen Senden mittels Mehrsendersysteme, entgegenzuwirken. Bspw. zeigt die US 2014/0355626 A1 eine Ausgestaltung mit einem Schutzintervall, das durch ein Schutzwort ersetzt werden kann, um die Schutzintervalllänge flexibel auf unterschiedliche Gegebenheiten einstellen zu können.

Der vorliegenden Erfindung liegt die Aufgabe zugrunde das drahtlose Senden und Empfangen eines Zusatzinformationssignals zu ermöglichen, um den gesamten Nutzdatendurchsatz zu erhöhen.

Die vorliegende Erfindung schlägt gemäß einem ersten Aspekt einen Sender zum drahtlosen Senden eines Zusatzinformationssignals vor, wobei der Sender dazu eingerichtet ist das Zusatzinformationssignal in Abhängigkeit eines Steuersignals auszusenden, wobei das Steuersignal dadurch gekennzeichnet ist, dass es mit einem Sendezeitpunkt innerhalb eines Schutzintervalls eines drahtlos übertragenen Primärinformationssignals korrespondiert, wobei das Primärinformationssignal von einem anderen Sender stammt, und der erfindungsgemäße Sender dazu eingerichtet ist das Zusatzinformationssignal zu dem Sendezeitpunkt innerhalb des Schutzintervalls des Primärinformationssignals drahtlos auszusenden. Erfindungsgemäß richtet sich das Aussenden des Zusatzinformationssignals nach den Schutzintervallen bzw. nach der Überlagerung der Schutzintervalle, die innerhalb des Primärinformationssignals angeordnet sind. Mit dem Primärinformationssignal sind alle möglichen Informationssignale gemeint, die durch einen oder mehrere Sender drahtlos ausgestrahlt werden und senderseitig über Schutzintervalle verfügen. Der erfindungsgemäße Sender ist dazu eingerichtet, um in Abhängigkeit von zeitlichen Überlagerungen von Schutzintervallen eines anderen Informationssignals, welches hier zur besseren technischen Einordnung als Primärinformationssignal bezeichnet ist, das Zusatzinformationssignal auszusenden. Hierbei korrespondiert der Sendezeitpunkt zum Aussenden des Zusatzinformationssignals mit den Schutzintervallen des Primärinformationssignals. Der erfindungsgemäße Sender ist somit derart eingerichtet, dass ein Steuersignal, welches mit dem zeitlichen Aufkommen von Schutzintervallen des Primärinformationssignals korrespondiert, verarbeitet und zum Aussenden des Zusatzinformationssignals eingesetzt wird. Somit verfügt der erfindungsgemäße Sender über eine Steuersignalschnittstelle zum Aussenden des Zusatzinformationssignals und das Steuersignal richtet sich nach den zeitlichen Aufkommen der Schutzintervalle des Primärinformationssignals. Zur Verdeutlichung ist hier der Begriff Schutzintervall zu spezifizieren, weil in der technischen Literatur unterschiedliche Definitionen verwendet werden. Gemäß der vorliegenden Erfindung ist mit dem Begriff Schutzintervall ein Zeitfenster in dem Informationssignal bzw. in dem Primärinformationssignal gemeint, welches zur besseren Empfangbarkeit des Primärinformationssignals als Abstandhalter zwischen den Symbolen des Primärinformationssignals angeordnet ist. Das Schutzintervall kann entweder vollständig frei von irgendwelchen Symbolen oder Signalanteilen sein oder anteilig über Signalelemente verfügen.

Der oben genannte erste Aspekt der vorliegenden Erfindung führt zu dem Vorteil, dass in Gebieten mit einem Schutzintervall, welches über eine Reserve verfügt, ein Zusatzinformationssignal ausgestrahlt werden kann. Hierdurch wird auf vorteilhafte Weise der Datendurchsatz erhöht. Zusätzlich wird der gleiche Frequenzbereich des Primärinformationssignals besser ausgenutzt und nicht ein zusätzlicher Frequenzbereich verwendet, sodass das Frequenzspektrum als Ressource unbeeinträchtigt bleibt bzw. besser ausgeschöpft wird. Unter dem Begriff "Reserve" ist gemeint, dass ortsweise und/oder zeitweise ein vorgesehenes oder aufkommendes Schutzintervall zu groß sein kann, sodass diese vorhandene Reserve erfindungsgemäß besser ausgeschöpft werden kann.

Gemäß einem weiteren Aspekt der vorliegenden Erfindung weist der Sender eine Verarbeitungseinheit auf, um das Primärinformationssignal zu empfangen und zu verarbeiten und das mit dem Sendezeitpunkt korrespondierende Steuersignal abzuleiten, damit das Zusatzinformationssignal zu dem Sendezeitpunkt innerhalb des Schutzintervalls des Primärinformationssignals ausgesendet werden kann. Hierbei findet eine Verarbeitung des Primärinformationssignals statt, um die eingebauten Schutzintervalle innerhalb des Primärinformationssignals zu detektieren und basierend darauf Steuersignale abzuleiten, die das zeitliche Aussenden des Zusatzinformationssignals vorgeben.

Weiter erfindungsgemäß wird ein Sender vorgeschlagen, welcher eingerichtet ist, um ein zusammengesetztes Informationssignal aus Teilen des Primärinformationssignals und dem Zusatzinformationssignal auszusenden, wobei der Sender eingerichtet ist das Zusatzinformationssignal innerhalb des Schutzintervalls des Primärinformationssignals auszusenden. Hierbei wird vorzugsweise der Nutzsignalanteil des Primärinformationssignals, insbesondere die Symbole aus dem Primärinformationssignal abgeleitet und mit einem Zusatzinformationssignal als zusammengesetztes Informationssignal ausgesendet. Somit wird hier ein neues Signal erzeugt und ausgesendet, weil nicht nur das Zusatzinformationssignal, sondern auch die Symbole aus dem Primärinformationssignal von dem Sender ausgestrahlt werden.

Nach einem weiteren erfindungsgemäßen Aspekt weist der Sender eine Schnittstelle zum Empfangen eines externen Steuersignals auf, wobei das externe Steuersignal mit dem Sendezeitpunkt innerhalb des Schutzintervalls des Primärinformationssignals korrespondiert, damit das Zusatzinformationssignal zu dem Sendezeitpunkt innerhalb des Schutzintervalls des Primärinformationssignals ausgesendet werden kann. Hierbei wird der erfindungsgemäße Sender mit einem externen Steuersignal versorgt, sodass keine Eigendetektion des Senders nach Schutzintervallen mittels Empfangens und Verarbeitens des Primärinformationssignals stattfindet. Dieser Aspekt weist den Vorteil auf, dass eine gezielte Einspeisung des Steuersignals stattfindet und auch eine Kopplung mit einem Primärinformationssignal aussendenden Sender realisiert werden kann (besonders interessant bei einem einzelnen Primärsender). Zusätzlich kann auch der Primärinformationssignal aussendende Sender ein Richtsignal mitaussenden, welches den erfindungsgemäßen Sender zum synchronisierten Aussenden des Zusatzinformationssignals dient.

Weiter nach einem erfindungsgemäßen Aspekt ist der Sender dazu eingerichtet, um zumindest ein Hilfssignal innerhalb des Schutzintervalls des Primärinformationssignals auszusenden, wobei das Hilfssignal derart ausgestaltet ist, um ein empfängerseitiges Ableiten, Verarbeiten oder Erkennen des Zusatzinformationssignals zu verbessern. Hierbei ist ein Hilfssignal vorgesehen, welches die Verbesserung der Empfangsqualität des Zusatzinformationssignals ermöglicht. Hierzu können bekannte Techniken, wie Cyclic-Präfix (CP) oder anders geartete Signale zum Einsatz kommen.

Weiter erfindungsgemäß liegen das Zusatzinformationssignal und das Primärinformationssignal im Wesentlichen im gleichen Frequenzbereich, insbesondere gemäß einem OFDM-basierten System, wie etwa dem DVB-T-Standard, dem LTE-Standard, dem WiFi/WLAN-Standard oder DAB-Standard spezifiziert sind. Die Erfindung setzt voraus, dass das Zusatzinformationssignal und das Primärinformationssignal im gleichen Frequenzbereich liegen, denn es kann auch für Konstellationen zum Einsatz kommen, die im Allgemeinen zu einer gegenseitigen negativen Beeinträchtigung zwischen dem Zusatzinformationssignal und dem Primärinformationssignal kommt., obwohl diese nicht im gleichen oder benachbarten Frequenzbereichen liegen.

Weiter erfindungsgemäß wird ein Verfahren zum drahtlosen Senden eines Zusatzinformationssignals vorgeschlagen, wobei das Verfahren folgende Schritte aufweist: drahtloses Senden des Zusatzinformationssignals in Abhängigkeit eines Steuersignals, wobei das Steuersignal mit einem Sendezeitpunkt innerhalb eines Schutzintervalls eines drahtlos übertragenen Primärinformationssignals korrespondiert, um das Zusatzinformationssignal in Abhängigkeit des Steuersignals zu senden. Weiter kann das vorgenannte Verfahren einen Schritt zum Empfangen und Verarbeiten des Primärinformationssignals und Ableiten des mit dem Schutzintervall korrespondierenden Steuersignals aus dem Primärinformationssignal aufweisen, um das Zusatzinformationssignal in Abhängigkeit des Steuersignals zu dem gewünschten Sendezeitpunkt drahtlos auszusenden. Zusätzlich können die vorgenannten Verfahren einen Schritt zum Empfangen eines externen Steuersignals aufweisen. Ferner können die vorgenannten Verfahren mit den dazugehörigen Varianten und Alternativen einen Schritt zum Aussenden eines Hilfssignals aufweisen, wobei das Hilfssignal derart ausgestaltet ist, um ein empfängerseitiges Verarbeiten oder Erkennen des Zusatzinformationssignals zu verbessern. Weiter vorteilhaft werden Vorrichtungen vorgeschlagen, die eingerichtet sind eines der oben aufgeführten Verfahren durchzuführen, wobei die Vorrichtung insbesondere ein Repeater, ein Telefon, ein Smart-Phone, ein Notebook, ein Tablet-PC, ein Radio, ein Router, ein WiFi/WLAN-Router, ein Gateway oder eine Kabelkopfstation ist.

Gemäß einem weiteren Aspekt der Erfindung wird ein Empfänger zum drahtlosen Empfangen eines Zusatzinformationssignals und eines Primärinformationssignals, vorgeschlagen, wobei erfindungsgemäß das Zusatzinformationssignal innerhalb eines Schutzintervalls des Primärinformationssignals angeordnet ist.

Weiter vorteilhaft ist der Empfänger dazu eingerichtet ein Hilfssignal des Zusatzinformationssignals innerhalb des Schutzintervalls des Primärinformationssignals zu verarbeiten, wobei das Hilfssignal derart ausgestaltet ist, um ein empfängerseitiges Ableiten, Erkennen oder Verarbeiten des Zusatzinformationssignals zu verbessern.

Ferner auf vorteilhafter Weise liegen das Zusatzinformationssignal und das Primärinformationssignal im Wesentlichen im gleichen Frequenzbereich, insbesondere gemäß einem OFDM-basierten System, wie etwa dem DVB-T-Standard, dem LTE-Standard, dem WiFi/WLAN-Standard oder dem DAB-Standard spezifiziert sind.

Weiter vorteilhaft weist der Empfänger einen Schalter zum Auswählen des Zusatzinformationssignals und/oder des Primärinformationssignals auf, wobei der Schalter zumindest teilweise aus Hardwareelementen und/oder Softwareelementen, insbesondere als Schalter ausgeführt ist und wobei der Empfänger insbesondere, beispielsweise ein Fernsehgerät, Smart-TV, HbbTV, Telefon, Mobiltelefon, Smart-Phone, Notebook, Tablet-PC, Smart Watch oder ein Radio ist. Hierbei kann der Schalter zum Beispiel als On Screen Display, Menüpunkt ausgeführt sein und über eine Taste oder berührungssensitiv bedienbar sein.

Weiter erfindungsgemäß wird ein Verfahren zum Empfangen eines drahtlos übertragenen Zusatzinformationssignals vorgeschlagen, wobei das Verfahren einen Schritt zum Empfangen und Ableiten des Zusatzinformationssignals und eines drahtlos übertragenen Primärinformationssignals aufweist, wobei das Zusatzinformationssignal innerhalb eines Schutzintervalls des Primärinformationssignals angeordnet ist, und einen weiteren Schritt zum Detektieren und Verarbeiten des Zusatzinformationssignals und/oder des Primärinformationssignals beinhaltet.

Weiter erfindungsgemäß wird ein Verfahren mit einem weiteren Schritt zum Empfangen und Verarbeiten eines Hilfssignals vorgeschlagen, wobei das Hilfssignal dem Zusatzinformationssignal zugeordnet ist und innerhalb des Schutzintervalls des Primärinformationssignals angeordnet ist, um ein Ableiten, Erkennen oder Verarbeiten des Zusatzinformationssignals zu verbessern. Hierbei ist gemeint, dass das vorgenannte Hilfssignal zum Ableiten, Erkennen oder Verarbeiten des Zusatzinformationssignal beiträgt und speziell zu diesem Zweck generiert und ausgesandt wird.

Ferner ist ein Verfahren mit einem Schritt zum Bereitstellen eines Schalters zum Auswählen des Zusatzinformationssignals und/oder des Primärinformationssignals für eine Verarbeitung vorgesehen. Der erfindungsgemäße Schalter ermöglicht insbesondere bei einem Empfänger die Auswahl zum Ableiten, Erkennen oder Verarbeiten des Primärinformationssignals und/oder Zusatzinformationssignals.

Gemäß einem weiteren Aspekt der vorliegenden Erfindung wird ein Computerprogrammprodukt vorgeschlagen, welches verkörpert auf einem maschinenlesbaren Datenträger, implementierend ein Verfahren nach einem der hier vorgeschlagenen Verfahren ein Ausführen eines der Verfahren realisiert.

Vorzugsweise ergibt sich der Vorteil, dass sowohl neuartige Geräte zur Verarbeitung von erfindungsgemäß übertragenen Informationssignalen als auch ältere Geräte, die nicht über die erfindungsgemäße Technik verfügen in der Lage sein werden entsprechende Signale zu verarbeiten, weil das Primärinformationssignal weiterhin für die älteren Geräte verarbeitbar bleiben kann, solange sichergestellt wird, dass entsprechende Symbole aus dem Primärinformationssignal abgeleitet werden können. Zusätzlich können erfindungsgemäße Geräte sowohl das Primärinformationssignal als auch das Zusatzinformationssignal verarbeiten.

Im Nachfolgenden wird die Erfindung mit entsprechenden Figuren näher beschrieben.
Figur 1 zeigt einen zeitlichen Aufbau eines Primärinformationssignals bzw. eines übertragenen Informationssignals gemäß dem Stand der Technik.
Figur 2 zeigt einen weiteren zeitlichen Aufbau eines Primärinformationssignals gemäß dem Stand der Technik unter zusätzlicher Nutzung eines Guardintervalls.
Figur 3 zeigt einen zeitlichen Aufbau beim synchronen Übertragungsverlauf von zwei Primärinformationssignalen gemäß dem Stand der Technik unter Verwendung von Guardintervallen.
Figur 4 zeigt analog zur Figur 3 einen zeitlichen Aufbau bei einem zeitversetzen Übertragen bzw. Empfang von zwei Primärinformationssignalen gemäß dem Stand der Technik unter Verwendung von Guardintervallen.
Figur 5 zeigt basierend auf Figur 4 einen zeitlichen Aufbau bei einem zeitversetzen Übertragen bzw. Empfang von zwei Primärinformationssignalen gemäß dem Stand der Technik, wobei ein zusätzliches Zeitfenster (Additional Time Window) somit innerhalb eines Schutzintervalls des Primärinformationssignals zur erfindungsgemäßen Übertragung von einem Zusatzinformationssignal aufgezeigt ist.
Figur 6 zeigt eine erfindungsgemäße Ausführungsform zur Übertragung von Zusatzinformationssignalen.
Figur 7 zeigt eine weitere erfindungsgemäße Ausführungsform zur Übertragung von Zusatzinformationssignalen.
Figur 8 zeigt eine weitere erfindungsgemäße Ausführungsform zur Übertragung von Zusatzinformationssignalen.
Figur 9 zeigt eine erfindungsgemäße Ausführungsform zur Übertragung von Zusatzinformationssignalen.
Figur 10 zeigt einen ersten alternativen Sender Alt.1 und einen zweiten alternativen Sender Alt.2 gemäß der vorliegenden Erfindung zum Übertragen eines Zusatzinformationssignals.
Figur 11 zeigt eine erste Alternative eines erfindungsgemäßen Senders zum Übertragen eines Zusatzinformationssignals, wobei der Sender innerhalb eines Gebäudes angeordnet ist.
Figur 12 zeigt einen schematischen Aufbau eines erfindungsgemäßen Empfängers zum Verarbeiten von empfangenen Primärinformationssignalen und Zusatzinformationssignalen.

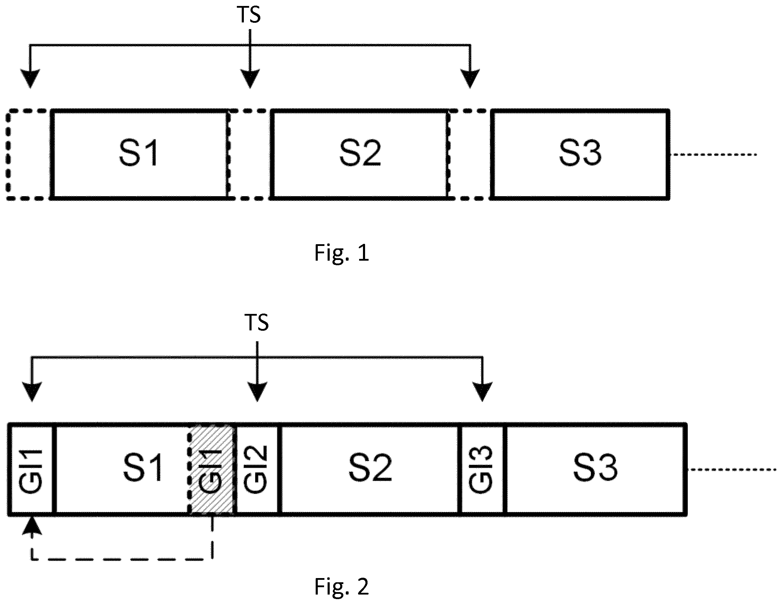

Figur 1 stellt einen zeitlichen Aufbau eines Primärinformationssignals gemäß dem Stand der Technik dar. Hierbei setzt sich das Primärinformationssignal aus Symbolen S1, S2 und S3 zusammen, die in der Zeit aufeinanderfolgend auftreten bzw. nacheinander übertragen werden. Figur 1 zeigt weiter drei Zeitfenster TS (Time Slot) vor dem Symbol S1, zwischen den Symbolen S1/S2 und zwischen S2/S3. Die Zeitfenster TS werden zwischen zwei Symbolen platziert, wobei das Zeitfenster TS vor S1 nur vollständigkeitshalber dargestellt ist und nur im Falle eines weiteren vor dem S1 platzierten Symbols einen technischen Beitrag liefert. Die dargestellten Zeitfenster TS sind hier frei von Signalen. Ergänzend ist hier anzumerken, dass das Zeitfenster TS in der technischen Literatur auch vereinzelt als Guardintervall bezeichnet wird, obwohl kein Signal innerhalb des Zeitfensters TS übertragen wird.

Figur 2 zeigt analog zur Figur 1 einen weiteren zeitlichen Aufbau eines Primärinformationssignals bestehend aus S1, S2 und S3 gemäß dem Stand der Technik unter zusätzlicher Nutzung eines Guardintervalls welches zumindest teilweise einen Informationssignalanteil aufweist. Hierbei ist vor dem Symbol S1 und zwischen den Symbolen S1/S2 und S2/S3 ein Guardintervall GI1, GI2 und GI3 auch genannt als Schutzintervall in dem Zeitfenster TS (Time Slot) platziert. Im Unterschied zur Figur 1 ist das Guardintervall GI1, GI2 und GI3 zumindest anteilig mit einem Signalanteil versehen. Die Guardintervalle GI1, GI2 und GI3 enthalten üblicherweise ein Anteil eines Endes eines Symbols S1, S2 und S3 und werden beispielsweise für ein Autokorrelationsverfahren zum Ableiten des gesamten Symbols S1, S2 und S3 verwendet.

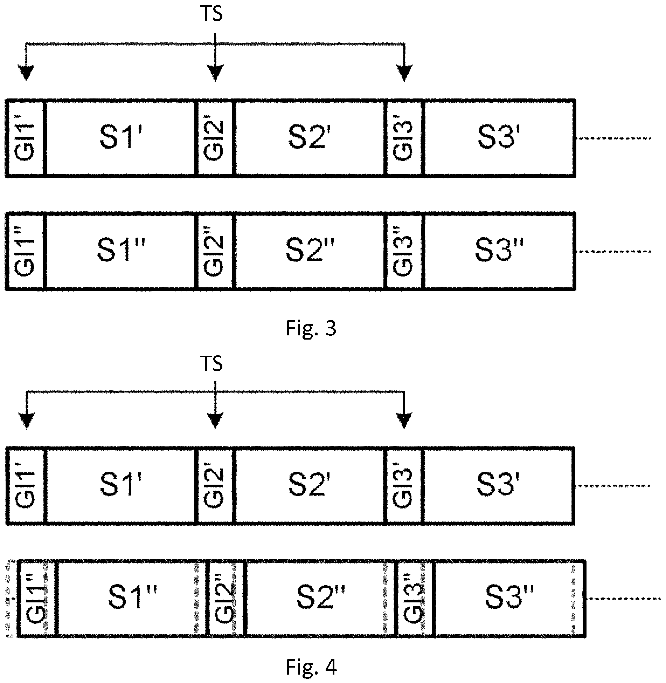

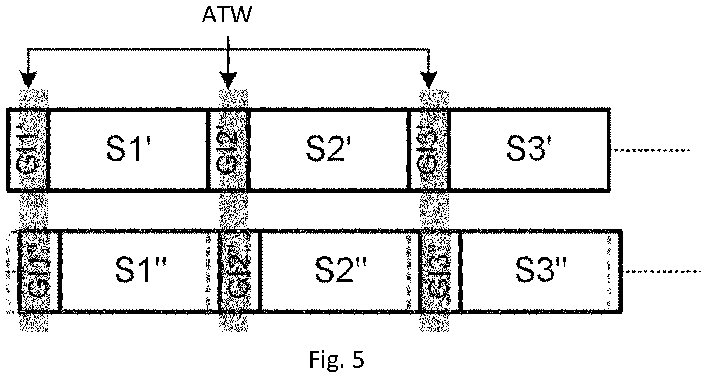

Figur 3 zeigt analog zur Figur 2 einen zeitlichen Aufbau beim synchronen Übertragungsverlauf von zwei Primärinformationssignalen S1', S2', S3' und S1", S2", S3" unter Verwendung von Guardintervallen GI1', GI2', GI3' und GI1", GI2", GI3", wobei das Übertragen der von jeweils einem Primärinformationssignal S1', S2', S3' und S1", S2", S3" über einen separaten Sender ausgeführt wird. Die Guardintervalle GI1', GI2', GI3' und GI1 ", GI2", GI3" sind derart dimensioniert, dass wenn die zwei Primärinformationssignale S1', S2', S3' und S1" S2", S3" zur ungleichen Zeiten bei einem Empfänger eintreffen, die Symbole S1', S2', S3' überlagert mit S1", S2", S3" trotzdem abgeleitet werden können. Figur 4 zeigt analog zur Figur 3 einen zeitlichen Aufbau bei einem zeitversetzen Übertragen bzw. Empfang von zwei Primärinformationssignalen S1', S2', S3' und S1", S2", S3" unter Verwendung von Gurardintervallen GI1', GI2', GI3' und GI1 ", GI2", GI3" gemäß dem Stand der Technik. In Figur 4 ist der zeitliche Versatz durch schraffierte Rechtecke, welche die GI1', GI2', GI3' symbolisieren im Primärinformationssignal S1', S2', S3' dargestellt. Figur 5 zeigt basierend auf Figur 4 einen zeitlichen Aufbau bei einem zeitversetzen Übertragen bzw. Empfang von zwei Primärinformationssignalen S1', S2', S3' und S1", S2", S3" unter Verwendung von Guardintervallen GI1', GI2', GI3' und GI1", GI2", GI3", wobei erfindungsgemäß ein zusätzliches Zeitfenster ATW (Additional Time Window) zur Übertragung von einem Zusatzinformationssignal aufgezeigt ist. Erfindungsgemäß kann ein Zusatzinformationssignal innerhalb des Zeitfensters ATW eingeordnet und übertragen werden. Vorzugsweise befindet sich das Zeitfenster ATW innerhalb von Zeitgrenzen, die gerade nicht zur Übertragung von Symbolen S1', S2', S3' und S1", S2", S3" verwendet werden.

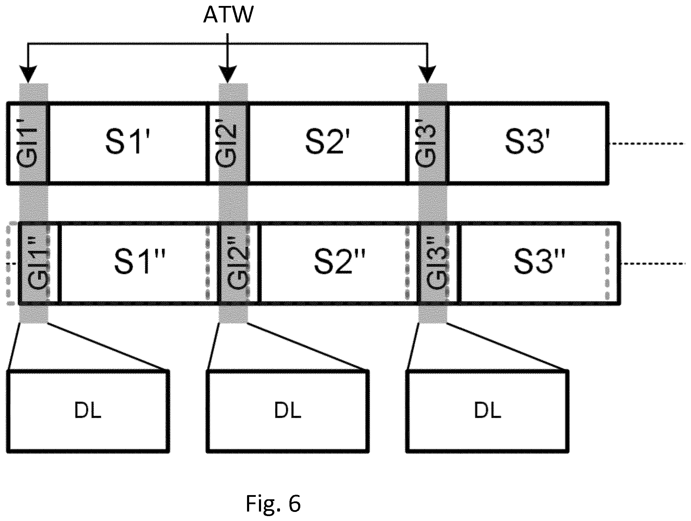

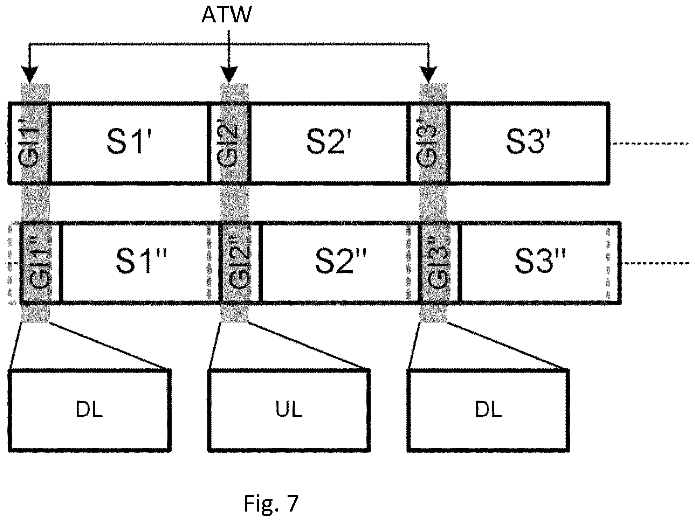

Figur 6 zeigt eine erfindungsgemäße Übertragung von Zusatzinformationssignalen als DL (Downlink) innerhalb von Zeitfenster ATW (Additional Time Window). Erfindungsgemäß werden die DL innerhalb der Zeitfenster ATW in einem von den Symbolen S1', S2', S3' und S1", S2", S3" nicht überlappenden Bereich übertragen. Erfindungsgemäß, wie in Figur 7 dargestellt, können auch statt DL (Downlink) auch UP (Uplink) bzw. Uplinksignale übertragen werden, sodass ein erfindungsgemäßer Empfänger analog zu einem erfindungsgemäßen Sender das Zeitfenster ATW zum Übertragen von UL verwenden kann. Weiter erfindungsgemäß können auch jeweils aufeinanderfolgende Zeitfenster ATW innerhalb einer Übertragung von S1', S2', S3' und S1", S2", S3" beliebig bzw. nach Bedarf für eine Übertragung von DL oder UL verwendet werden.

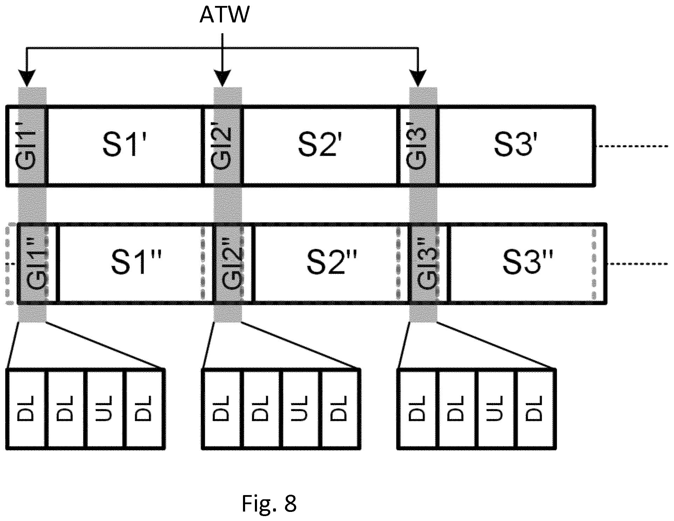

Figur 8 zeigt erfindungsgemäß eine weitere Ausführungsform, wobei ein einzelnes Zeitfenster ATW innerhalb des Schutzintervalls eines Primärinformationssignals sowohl für eine Übertragung von DL (Downlink) als auch UL (Uplink) verwendet wird. Hierbei kann erfindungsgemäß ein einzelnes ATW bzw. Zeitbereich innerhalb des Schutzintervalls des Primärinformationssignals beliebig und bedarfsweise für eine kombinierte Übertragung von DL und UL verwendet werden.

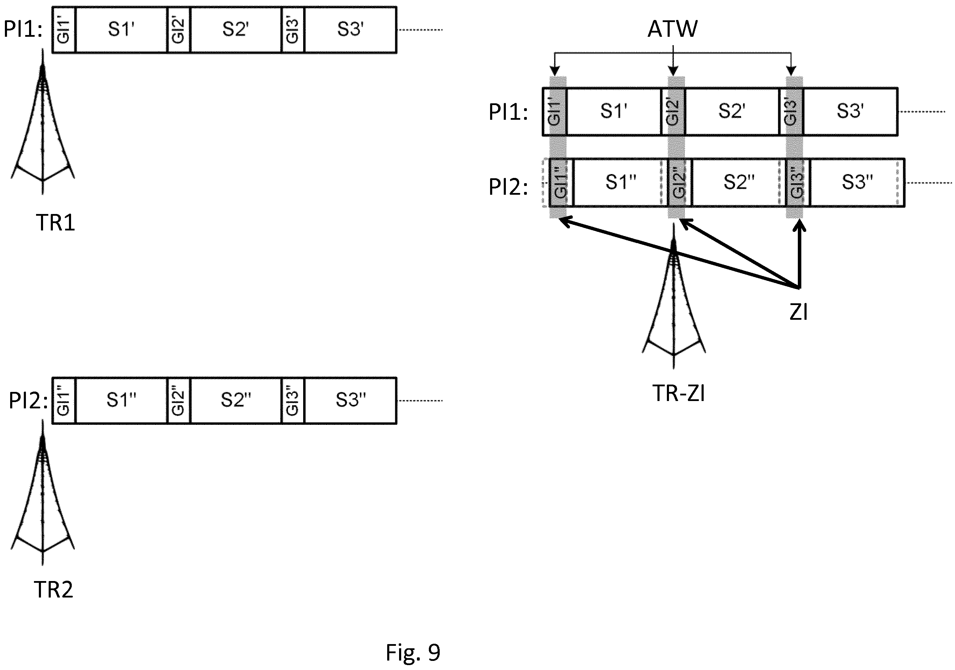

Figur 9 zeigt eine erfindungsgemäße Übertragung eines Zusatzinformationssignals ZI innerhalb von Zeitfenster ATW durch einen erfindungsgemäßen Sender TR-ZI. Als gegeben wird hierbei zunächst ein erstes übertragenes Primärinformationssignal PI1 durch einen ersten Sender TR1 und ein zweites übertragenes Primärinformationssignal PI2 durch einen zweiten Sender TR2 betrachtet. Wie in Figur 9 dargestellt kommen die übertragenen Primärinformationssingale PI1 und PI2 zeitversetz in der Umgebung des Senders TR-ZI an, wobei der vorgenannte Zeitversatz mit Hilfe von gestrichelten Linien in dem angekommenen Primärinformationssignal PI2 oberhalb des Senders TR-ZI symbolisiert ist. Der Sender TR-ZI ist erfindungsgemäß eingerichtet, um innerhalb des sich durch Überlappung ergebenden Zeitfenster ATW das Zusatzinformationssignal ZI geeignet zu platzieren und auszusenden. Somit kommt es erfindungsgemäß zu einer lokalen Übertragung von Zusatzinformationssignalen ZI unter Ausnutzung der zur Verfügung stehenden Zeitfenster ATW. Weiter erfindungsgemäß kann sich auch der Sender TR-ZI in einem von den gesendeten Signalen PI1 und PI2 im Wesentlichen abgeschirmten bzw. von denen abgeschnittenen Bereich, wie zum Beispiel im Indoorbereich befinden. Bei dem vorgenannten Szenario ist der erfindungsgemäße Sender TR-ZI eingerichtet das Primärinformationssignal zu erhalten und in den jeweiligen Zeitfenster ATW das Zusatzinformationssignal einzufügen, um anschließen sowohl das Primärinformationssignal als auch das Zusatzinformationssignal auszusenden. Hieraus ergeben sich weitere erfindungsgemäße Einsatzmöglichkeiten, insbesondere in Bereichen, in denen ein Empfang von Primärinformationssignalen nicht möglich ist, wobei jedoch erfindungsgemäß zusätzlich ein Übertragen von Zusatzinforationssignalen ermöglicht wird.

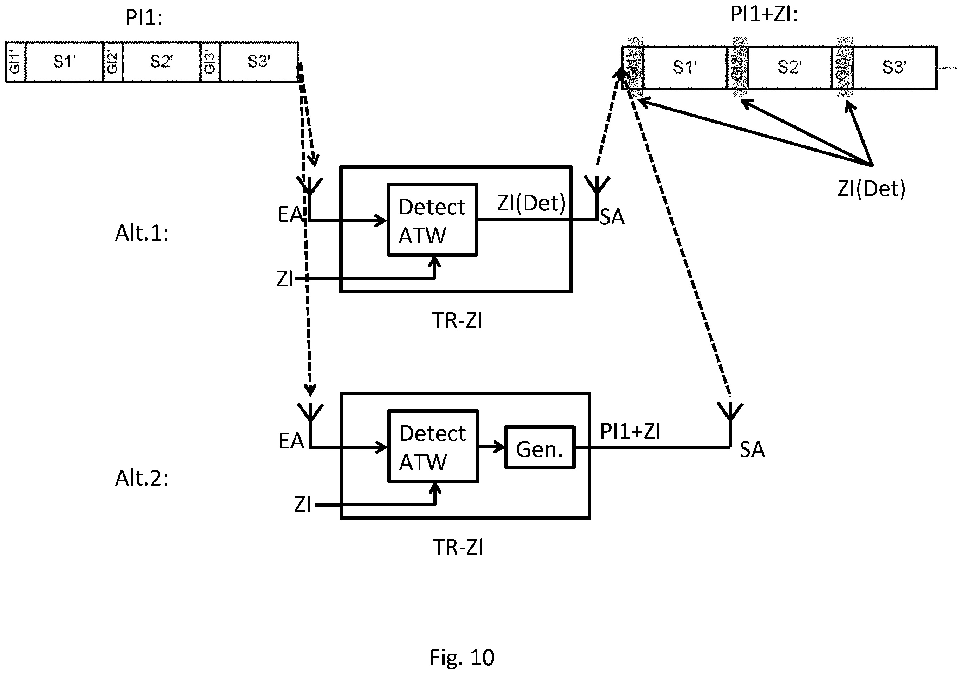

Figur 10 zeigt einen erfindungsgemäßen Sender TR-ZI gemäß einer ersten und zweiten Alternative Alt.1 und Alt.2 zum Übertragen eines Zusatzinformationssignals. Die erste Alternative Alt.1 des erfindungsgemäßen Sender TR-ZI aufweisend eine Empfangsantenne EA zum Empfangen eines Primärinformationssignals PI1 mit Symbolen S1', S2' und S3' mit entsprechenden Guardintervallen GI1', GI2' und GI3' und eine Sendeantenne SA zum Aussenden eines Zusatzinformationssignals ZI innerhalb von zusätzlichen Zeitfenster ATW, somit zum Aussenden des Zusatzinformationssignals ZI in Abhängigkeit von den detektierten zusätzlichen Zeitfenstern ATW. Der Sender TR-ZI weist einen weiteren Eingang ZI zum Empfangen und Verarbeiten eines Zusatzinformationssignals ZI auf, wobei der Eingang ZI auch als ein innerhalb des Senders TR-ZI realisierter Eingang aufgefasst werden kann, insbesondere als ein interner Eingang, welcher eingerichtet ist um über einen Speicher mit einem gewünschten gespeicherten oder zugeführten Zusatzinformationssignal, um das Zusatzinformationssignal dem Sender TR-ZI bereitzustellen. Weiter weist der Sender TR-ZI eine Detektionseinheit Detect-ATW auf, wobei die Detektionseinheit Detect-ATW dazu eingerichtet ist, um die zusätzlichen Zeitfenster ATW innerhalb des Primärinformationssignals zu detektieren um eine anschließende Aussendung von Zusatzinformationssignalen ZI bzw. nach der Detektion symbolisiert als ZI(Det) zu einem geeigneten Zeitpunkt zu gewährleisten, um zusätzlich zum dem in der Luft vorhandene Primärinformationssignal PI1 ein Zusatzinformationssignal ZI innerhalb der Guardintervalle GI1', GI2' und GI3' des Primärinformationssignals PI1 empfangbar zu machen. Der erfindungsgemäße Sender TR-ZI gemäß der zweiten Alternative Alt.2 ist dazu eingerichtet das empfangene Primärinformationssignal PI1 nicht nur zum Detektieren von zusätzlichen Zeitfenster ATW zu nutzen, sondern aus dem Primärinformationssignal PI1 zumindest die einzelnen Symbole S1', S2' und S3' ableiten und nach hinzufügen des Zusatzinformationssignals ZI ein vollständig neues Informationssignal bestehend aus PI1 und ZI/ZI(Det) zu generieren und auszusenden. Hierbei weist der Sender TR-ZI nach der zweiten Alternative Alt.2 eine Generierungseinheit GEN auf, um ausgangsseitig zum Aussenden eines Informationssignals bestehend aus Anteilen des Primärinformationssignal PI1 und dem Zusatzinformationssignal ZI bereitzustellen, welches als PI1+ZI symbolisiert ist. Somit ergeben sich zwei erfindungsgemäße Alternativen Alt.1 und Alt.2 zum Aussenden von Zusatzinformationssignalen ZI, wobei die erste Alternative Alt.1 nur geeignete Zeitpunkte zum Aussenden von Zusatzinformationssignalen ZI detektiert bzw. Guardintervalle detektiert und die zweite Alternative das Primärinformationssignal PI derart weiterverarbeitet, dass zumindest die Symbole S1', S2' und S3' abgeleitet werden und entsprechende Symbole bzw. Daten des Zusatzinformationssignals ZI hinzugefügt werden und daraus ein neues Informationssignal geschaffen und ausgesendet wird. Das Zusatzinformationssignal ZI wird dann innerhalb des markierten Bereichs, welcher sich innerhalb von GI1', GI2' und GI3' befindet eingeordnet.

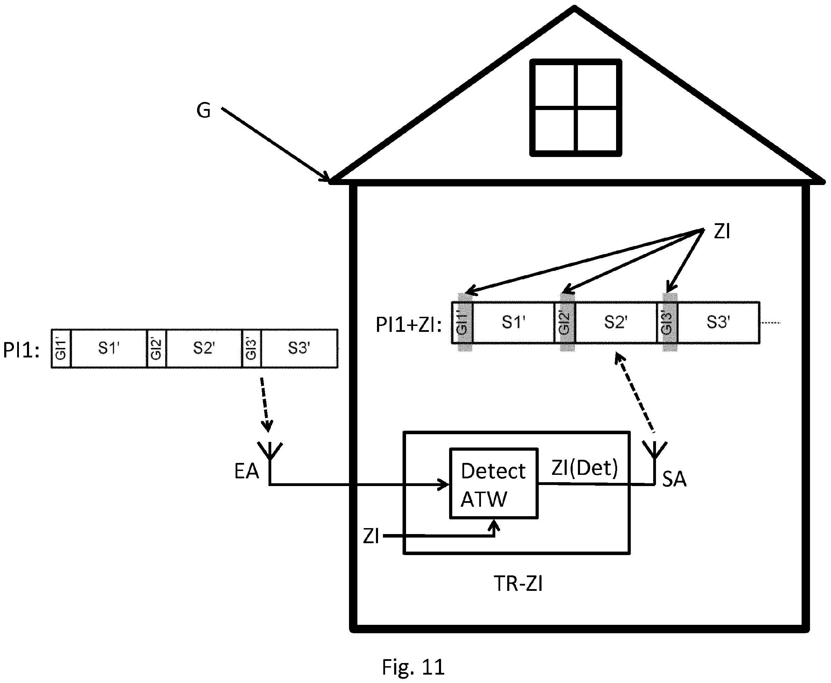

Figur 11 zeigt einen erfindungsgemäßen Sender TR-ZI gemäß der ersten Alternative Alt.1, wie in Figur 10 beschrieben, wobei der Sender TR-ZI innerhalb eines Gebäudes G angeordnet ist und zwar derart, dass ein von Außen empfangenes Primärinformationssignal PI innerhalb des Gebäudes G gedämpft oder überhaupt nicht empfangen werden kann. Hierbei wird das Primärinformationssignals PI jedoch von TR-ZI mittels der Empfangsantenne EA empfangen und dem Sender TR-ZI wie in Figur 10 beschrieben, bereitgestellt. Das ausgestrahlte Informationssignal PI1+ZI wird dann durch zeitgenaues Ausstrahlen des Zusatzinformationssignals ZI mittels der Detektionseinheit Detect ATW in der Luft bereitgestellt. Vollständigkeitshalber wird darauf hingewiesen das auch der erfindungsgemäßer Sender nach der zweiten Alternative Alt.2, wie in Figur 10 beschrieben, hier zum Einsatz kommen kann.

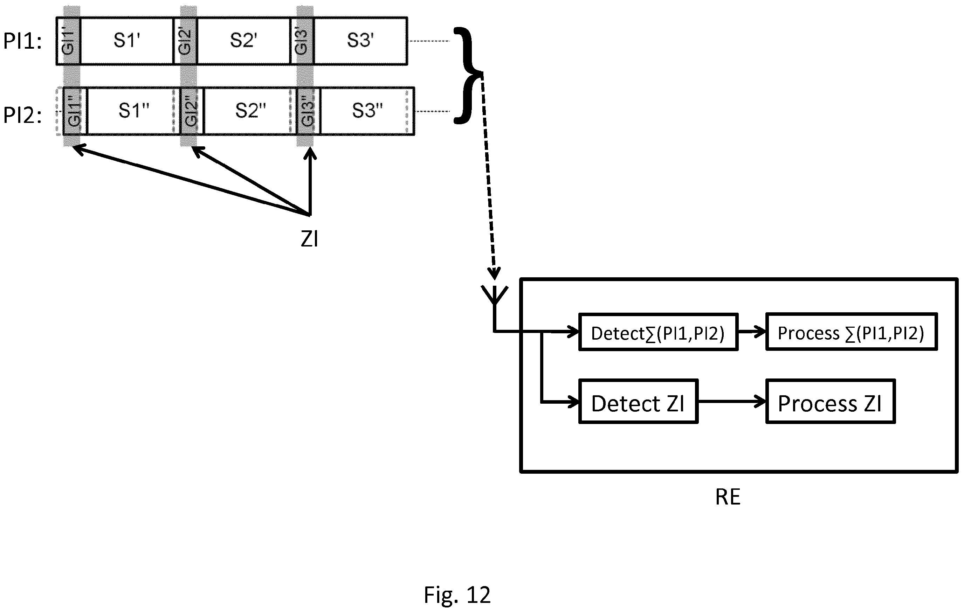

Figur 12 zeigt einen schematischen Aufbau eines erfindungsgemäßen Empfängers RE zum Verarbeiten von empfangenen Primärinformationssignal ∑(PI1,PI2) und Zusatzinformationssignalen ZI. Hierbei wird davon ausgegangen, dass von mehreren Sendern Primärinformationssignale PI1 und PI2 ausgestrahlt werden, wobei zumindest in einem oder mehreren Primärinformationssignalen PI1 Und PI2 ein Zusatzinformationssignal ZI erfindungsgemäß übertragen wird, wobei die vorgenannten Signale, wie in Figur 12 angedeutet, nicht zeitgleich, sondern zeitversetzt beim Empfänger RE als überlagertes Signal ∑(PI1+ZI,PI2+ZI) eintreffen. Der erfindungsgemäße Empfänger RE ist dazu eingerichtet, eine separate Bearbeitung der Signale vorzunehmen, sodass sowohl das überlagerte Primärinformationssignal ∑(PI1,PI2) als auch das Zusatzinformationssignal ZI detektiert, abgeleitet und verarbeitet werden können. Die vorgenannten Verarbeitungsstufen sind allgemein als Detect∑(PI1,PI2), Process∑(PI1,PI2), Detect Zi und ProcessZI in den jeweiligen Blöcken symbolisiert. Zusätzlich (nicht gezeigt) weist der erfindungsgemäße Empfänger RE einen Schalter zum Treffen einer Auswahl zwischen ∑(PI1,PI2) und/oder ZI auf. Somit kann eine automatische oder manuelle Auswahl zwischen den empfangenen Signalen ∑(PI1,PI2) und/oder ZI zur Weiterverarbeitung und/oder Bereitstellung realisiert werden.

## Patentansprüche

1. Sender (TR-ZI) zum drahtlosen Senden eines Zusatzinformationssignals (ZI), wobei der Sender (TR-ZI) eingerichtet ist, das Zusatzinformationssignal (ZI) in Abhängigkeit eines Steuersignals auszusenden, **dadurch gekennzeichnet, dass** das Steuersignal mit einem Sendezeitpunkt innerhalb eines Schutzintervalls eines drahtlos übertragenen Primärinformationssignals (PI), welches von einem anderen Sender stammt (TR1,TR2), korrespondiert, und der Sender eingerichtet ist, das Zusatzinformationssignal zu dem Sendezeitpunkt innerhalb des Schutzintervalls des Primärinformationssignals drahtlos auszusenden.

2. Sender (TR-ZI) nach Anspruch 1, wobei der Sender (TR-ZI) eine Verarbeitungseinheit (Detect ATW) aufweist, um das Primärinformationssignal (PI) zu empfangen und zu verarbeiten und das mit dem Sendezeitpunkt korrespondierende Steuersignal abzuleiten, damit das Zusatzinformationssignal (ZI) zu dem Sendezeitpunkt innerhalb des Schutzintervalls des Primärinformationssignals (PI) ausgesendet werden kann.

3. Sender (TR-ZI) nach Anspruch 1 oder 2, wobei der Sender (TR-ZI) dazu eingerichtet ist ein zusammengesetztes Informationssignal (PI+ZI) aus Teilen des Primärinformationssignals (PI) und dem Zusatzinformationssignal (ZI) auszusenden, wobei der Sender (TR-ZI) eingerichtet ist das Zusatzinformationssignal (ZI) innerhalb des Schutzintervalls des Primärinformationssignals (PI) auszusenden.

4. Sender (TR-ZI) nach einem der vorigen Ansprüche, wobei der Sender (TR-ZI) eine Schnittstelle zum Empfangen eines externen Steuersignals aufweist, wobei das externe Steuersignal mit dem Sendezeitpunkt innerhalb des Schutzintervalls des Primärinformationssignals (PI) korrespondiert, damit das Zusatzinformationssignal (ZI) zu dem Sendezeitpunkt innerhalb des Schutzintervalls des Primärinformationssignals (PI) ausgesendet werden kann.

5. Sender (TR-ZI) nach einem der vorigen Ansprüche, wobei der Sender (TR-ZI) eingerichtet ist, zumindest ein Hilfssignal innerhalb des Schutzintervalls des Primärinformationssignals (PI) auszusenden, wobei das Hilfssignal derart ausgestaltet ist, um ein empfängerseitiges Ableiten, Verarbeiten oder Erkennen des Zusatzinformationssignals (ZI) zu verbessern.

6. Sender (TR-ZI) nach einem der vorigen Ansprüche, wobei das Zusatzinformationssignal (ZI) und das Primärinformationssignal (PI) im Wesentlichen im gleichen Frequenzbereich liegen, insbesondere gemäß einem OFDM-basierten System, einem DVB-T-Standard, einem LTE-Standard, einem WiFi/WLAN-Standard oder DAB-Standard spezifiziert sind.

7. Verfahren zum drahtlosen Senden eines Zusatzinformationssignals (ZI), wobei das Verfahren folgende Schritte aufweist:
- drahtloses Senden, durch einen Sender (TR-ZI), des Zusatzinformationssignals (ZI) in Abhängigkeit eines Steuersignals, **dadurch gekennzeichnet, dass** das Steuersignal mit einem Sendezeitpunkt innerhalb eines Schutzintervalls eines drahtlos übertragenen Primärinformationssignals (PI), welches von einem anderen Sender (TR1,TR2) stammt, korrespondiert, um das Zusatzinformationssignal in Abhängigkeit des Steuersignals zu dem Sendezeitpunkt innerhalb des Schutzintervalls des Primärinformationssignals (PI) zu senden.

8. Verfahren nach Anspruch 7, wobei das Verfahren ferner folgende Schritte aufweist:
- Empfangen und Verarbeiten des Primärinformationssignals (PI) und
- Ableiten des mit dem Schutzintervall korrespondierenden Steuersignals aus dem Primärinformationssignal (PI), um das Zusatzinformationssignal (ZI) in Abhängigkeit des Steuersignals zu dem Sendezeitpunkt innerhalb des Schutzintervalls des Primärinformationssignals (PI) drahtlos auszusenden.

9. Verfahren nach Anspruch 7 oder 8, wobei das Verfahren ferner folgende Schritte aufweist:
Verarbeiten des Primärinformationssignals (PI), und
Vorbereiten und Aussenden eines neuen Informationssignals (PI+ZI) aus Teilen des Primärinformationssignals (PI) und dem Zusatzinformationssignal (ZI), wobei es vorgesehen ist das Zusatzinformationssignal (ZI) innerhalb des Schutzintervalls des Primärinformationssignals (PI) auszusenden.

10. Verfahren nach Anspruch 7 oder 8, wobei das Verfahren ferner einen Schritt zum Empfangen eines externen Steuersignals aufweist.

11. Verfahren nach einem der Ansprüche 7 bis 10, wobei das Verfahren ferner einen Schritt zum Aussenden eines Hilfssignals aufweist, wobei das Hilfssignal derart ausgestaltet ist, um ein empfängerseitiges Verarbeiten oder Erkennen des Zusatzinformationssignals (ZI) zu verbessern.

12. Empfänger (RE) zum drahtlosen Empfangen eines von einem Sender (TR-ZI) gesendeten Zusatzinformationssignals (ZI) und eines von einem anderen Sender (TR1,TR2) gesendeten Primärinformationssignals (PI), **dadurch gekennzeichnet, dass** das Zusatzinformationssignal (ZI) innerhalb eines Schutzintervalls des Primärinformationssignals (PI) angeordnet ist.

13. Empfänger (RE) nach Anspruch 12, wobei der Empfänger (RE) eingerichtet ist, ein Hilfssignal des Zusatzinformationssignals (ZI) innerhalb des Schutzintervalls des Primärinformationssignals (PI) zu verarbeiten, wobei das Hilfssignal derart ausgestaltet ist, um ein empfängerseitiges Ableiten, Erkennen oder Verarbeiten des Zusatzinformationssignals (ZI) zu verbessern.

14. Empfänger (RE) nach Anspruch 12 oder 13, wobei das Zusatzinformationssignal (ZI) und das Primärinformationssignal (PI) im Wesentlichen im gleichen Frequenzbereich liegen, insbesondere gemäß einem OFDM-basierten System, einem DVB-T-Standard, einem LTE-Standard, einem WiFi/WLAN-Standard oder einem DAB-Standard spezifiziert sind.

15. Empfänger (RE) nach einem der Ansprüche 12 bis 14, wobei der Empfänger (RE) einen Schalter zum Auswählen des Zusatzinformationssignals (ZI) und/oder des Primärinformationssignals (PI) aufweist, wobei der Schalter zumindest teilweise aus Hardwareelementen und/oder Softwareelementen, insbesondere als virtueller Schalter ausgeführt ist und wobei der Empfänger insbesondere ein Fernsehgerät, Smart-TV, HbbTV, Telefon, Mobiltelefon, Smart-Phone, Smart-Watch, Notebook, Tablet-PC oder ein Radio ist.

16. Verfahren zum Empfangen eines drahtlos übertragenen Zusatzinformationssignals (ZI), wobei das Verfahren folgende Schritte beinhaltet:
- Empfangen und Ableiten des von einem ersten Sender (TR-ZI) gesendeten Zusatzinformationssignals (ZI) und eines von einem zweiten Sender (TR1, TR2) drahtlos übertragenen Primärinformationssignals (PI), wobei das Zusatzinformationssignal (ZI) innerhalb eines Schutzintervalls des Primärinformationssignals (PI) angeordnet ist,
- Detektieren und Verarbeiten des Zusatzinformationssignals (ZI) und/oder des Primärinformationssignals (PI).

17. Verfahren nach Anspruch 16, wobei das Verfahren ferner den nachfolgenden Schritt beinhaltet:
- Empfangen und Verarbeiten eines Hilfssignals, wobei das Hilfssignal dem Zusatzinformationssignal (ZI) zugeordnet ist und innerhalb des Schutzintervalls des Primärinformationssignals (PI) angeordnet ist, um ein Ableiten, Erkennen oder Verarbeiten des Zusatzinformationssignals (ZI) zu verbessern.

18. Verfahren nach Anspruch 16 oder 17, wobei das Verfahren ferner den nachfolgenden Schritt beinhaltet:
- Bereitstellen eines Schalters zum Auswählen des Zusatzinformationssignals (ZI) und/oder des Primärinformationssignals (PI) für eine Verarbeitung.

19. Computerprogrammprodukt, verkörpert auf einem maschinenlesbaren Datenträger, implementierend ein Verfahren nach einem der Ansprüche 7 bis 11 oder 16 bis 18.

## Claims

1. Transmitter (TR-ZI) for wirelessly transmitting an additional information signal (ZI), the transmitter (TR-ZI) being set up to broadcast the additional information signal (ZI) as a function of a control signal, **characterised in that** the control signal corresponds to a moment of transmission within a guard interval of a wirelessly transferred primary information signal (PI) originating from another transmitter (TR1, TR2), and the transmitter is set up to broadcast the additional information signal wirelessly at the moment of transmission within the guard interval of the primary information signal.

2. Transmitter (TR-ZI) according to claim 1, wherein the transmitter (TR-ZI) has a processing unit (Detect ATW) for receiving and processing the primary information signal (PI) and deriving the control signal corresponding to the moment of transmission, in such a way that the additional information signal (ZI) can be broadcast at the moment of transmission within the guard interval of the primary information signal (PI).

3. Transmitter (TR-ZI) according to either claim 1 or claim 2, wherein the transmitter (TR-ZI) is set up to broadcast a combined information signal (PI+ZI) made up of parts of the primary information signal (PI) and additional information signal (ZI), the transmitter (TR-ZI) being set up to broadcast the additional information signal (ZI) within the guard interval of the primary information signal (PI).

4. Transmitter (TR-ZI) according to any of the preceding claims, wherein the transmitter (TR-ZI) has an interface for receiving an external control signal, the external control signal corresponding to the moment of transmission within the guard interval of the primary information signal (PI), in such a way that the additional information signal (ZI) can be broadcast at the moment of transmission within the guard interval of the primary information signal (PI).

5. Transmitter (TR-ZI) according to any of the preceding claims, wherein the transmitter (TR-ZI) is set up to broadcast at least one auxiliary signal within the guard interval of the primary information signal (PI), the auxiliary signal being configured so as to improve derivation, processing or detection of the additional information signal (ZI) at a receiver.

6. Transmitter (TR-ZI) according to any of the preceding claims, wherein the additional information signal (ZI) and the primary information signal (PI) are in substantially the same frequency range, in particular being specified in accordance with an OFDM-based system, a DVB-T standard, an LTE standard, a WiFi/WLAN standard or a DAB standard.

7. Method for wirelessly transmitting an additional information signal (ZI), the method comprising the following steps:
- wirelessly transmitting, by a transmitter (TR-ZI), of the additional information signal (ZI) as a function of a control signal, **characterised in that** the control signal corresponds to a moment of transmission within a guard interval of a wirelessly transferred primary information signal (PI) originating from another transmitter (TR1, TR2), so as to transmit the additional information signal as a function of the control signal at the moment of transmission within the guard interval of the primary information signal (PI).

8. Method according to either claim 7 or claim 8, wherein the method further comprises the following steps:
- receiving and processing the primary information signal (PI), and
- deriving the control signal corresponding to the guard interval from the primary information signal (PI) so as to broadcast the additional information signal (ZI) wirelessly as a function of the control signal at the moment of transmission within the guard interval of the primary information signal (PI).

9. Method according to either claim 7 or claim 8, the method further comprising the following steps:
- processing the primary information signal (PI), and
- preparing and broadcasting a new information signal (PI+ZI) made up of parts of the primary information signal (PI) and additional information signal (ZI), it being provided that the additional information signal (ZI) is broadcast within the guard interval of the primary information signal (PI).

10. Method according to either claim 7 or claim 8, wherein the method further comprises a step for receiving an external control signal.

11. Method according to any of claims 7 to 10, wherein the method further comprises a step for broadcasting an auxiliary signal, the auxiliary signal being configured so as to improve processing or detection of the additional information signal (ZI) at a receiver.

12. Receiver (RE) for wirelessly receiving an additional information signal (ZI) transmitted by a transmitter (TR-ZI) and a primary information signal (PI) transmitted by another transmitter (TR1, TR2), **characterised in that** the additional information signal (ZI) is arranged within a guard interval of the primary information signal (PI).

13. Receiver (RE) according to claim 12, wherein the receiver (RE) is set up to process an auxiliary signal of the additional information signal (ZI) within the guard interval of the primary information signal (PI), the auxiliary signal being configured so as to improve derivation, detection or processing of the additional signal (ZI) at a receiver.

14. Receiver (RE) according to either claim 12 or claim 13, wherein the additional information signal (ZI) and the primary information signal (PI) are in substantially the same frequency range, in particular being specified in accordance with an OFDM-based system, a DVB-T standard, an LTE standard, a WiFi/WLAN standard or a DAB standard.

15. Receiver (RE) according to any of claims 12 to 14, wherein the receiver (RE) comprises a switch for selecting the additional information signal (ZI) and/or the primary information signal (PI), the switch being configured at least in part from hardware elements and/or software elements, in particular as a virtual switch, and the receiver in particular being a television, smart TV, HbbTV, telephone, mobile telephone, smartphone, smartwatch, notebook, tablet PC or radio.

16. Method for receiving a wirelessly transferred additional information signal (ZI), wherein the method includes the following steps:
- receiving and deriving the additional information signal (ZI) transmitted by a first transmitter (TR-ZI) and a primary information signal (PI) wirelessly transferred by a second transmitter (TR1, TR2), the additional information signal (ZI) being arranged within a guard interval of the primary information signal (PI),
- detecting and processing the additional information signal (ZI) and/or the primary information signal (PI).

17. Method according to claim 16, wherein the method further includes the following step:
- receiving and processing an auxiliary signal, the auxiliary signal being assigned to the additional information signal (ZI) and being arranged within the guard interval of the primary information signal (PI) so as to improve derivation, detection or processing of the additional information signal (ZI).

18. Method according to either claim 16 or claim 17, wherein the method further includes the following step:
- providing a switch for selecting the additional information signal (ZI) and/or the primary information signal (PI) for processing.

19. Computer program product, provided on a machine-readable data carrier, implementing a method according to any of claims 7 to 11 or 16 to 18.

## Revendications

1. Émetteur (TR-ZI) pour émettre sans fil un signal d'information supplémentaire (ZI), l'émetteur (TR-ZI) étant configuré pour émettre le signal d'information supplémentaire (ZI) en fonction d'un signal de commande, **caractérisé en ce que** le signal de commande correspond à un instant d'émission dans un intervalle de garde d'un signal d'information primaire (PI) transmis sans fil qui provient d'un autre émetteur (TR1, TR2), et l'émetteur est configuré pour émettre sans fil le signal d'information supplémentaire à l'instant d'émission dans l'intervalle de garde du signal d'information primaire.

2. Émetteur (TR-ZI) selon la revendication 1, l'émetteur (TR-ZI) présentant une unité de traitement (Detect ATW) pour recevoir et traiter le signal d'information primaire (PI) et déduire le signal de commande correspondant à l'instant d'émission afin que le signal d'information supplémentaire (ZI) puisse être émis à l'instant d'émission dans l'intervalle de garde du signal d'information primaire (PI).

3. Émetteur (TR-ZI) selon la revendication 1 ou 2, l'émetteur (TR-ZI) étant configuré pour émettre un signal d'information composite (PI+ZI) composé de parties du signal d'information primaire (PI) et du signal d'information supplémentaire (ZI), et l'émetteur (TR-ZI) étant configuré pour émettre le signal d'information supplémentaire (ZI) dans l'intervalle de garde du signal d'information primaire (PI).

4. Émetteur (TR-ZI) selon l'une des revendications précédentes, l'émetteur (TR-ZI) présentant une interface pour recevoir un signal de commande externe, le signal de commande externe correspondant à l'instant d'émission dans l'intervalle de garde du signal d'information primaire (PI) afin que le signal d'information supplémentaire (ZI) puisse être émis à l'instant d'émission dans l'intervalle de garde du signal d'information primaire (PI).

5. Émetteur (TR-ZI) selon l'une des revendications précédentes, l'émetteur (TR-ZI) étant configuré pour émettre au moins un signal auxiliaire dans l'intervalle de garde du signal d'information primaire (PI), le signal auxiliaire étant conçu de manière à améliorer la déduction, le traitement ou la détection du signal d'information supplémentaire (ZI) du côté du récepteur.

6. Émetteur (TR-ZI) selon l'une des revendications précédentes, dans lequel le signal d'information supplémentaire (ZI) et le signal d'information primaire (PI) sont situés sensiblement dans la même gamme de fréquences, en particulier sont spécifiés selon un système basé sur l'OFDM, une norme DVB-T, une norme LTE, une norme WiFi/WLAN ou une norme DAB.

7. Procédé pour émettre sans fil un signal d'information supplémentaire (ZI), le procédé comprenant les étapes suivantes :
- émission sans fil, par un émetteur (TR-ZI), du signal d'information supplémentaire (ZI) en fonction d'un signal de commande, **caractérisé en ce que** le signal de commande correspond à un instant d'émission dans un intervalle de garde d'un signal d'information primaire (PI) transmis sans fil qui provient d'un autre émetteur (TR1, TR2), afin d'émettre le signal d'information supplémentaire en fonction du signal de commande à l'instant d'émission dans l'intervalle de garde du signal d'information primaire (PI).

8. Procédé selon la revendication 7, le procédé comprenant en outre les étapes suivantes :
- réception et traitement du signal d'information primaire (PI) et
- déduction du signal de commande correspondant à l'intervalle de garde à partir du signal d'information primaire (PI) afin d'émettre sans fil le signal d'information supplémentaire (ZI) en fonction du signal de commande à l'instant d'émission dans l'intervalle de garde du signal d'information primaire (PI).

9. Procédé selon la revendication 7 ou 8, le procédé comprenant en outre les étapes suivantes :
- traitement du signal d'information primaire (PI), et
- préparation et émission d'un nouveau signal d'information (PI+ZI) à partir de parties du signal d'information primaire (PI) et du signal d'information supplémentaire (ZI), dans lequel il est prévu d'émettre le signal d'information supplémentaire (ZI) dans l'intervalle de garde du signal d'information primaire (PI).

10. Procédé selon la revendication 7 ou 8, le procédé comprenant en outre une étape de réception d'un signal de contrôle externe.

11. Procédé selon l'une des revendications 7 à 10, le procédé présentant en outre une étape d'émission d'un signal auxiliaire, le signal auxiliaire étant conçu pour améliorer le traitement ou la détection du signal d'information supplémentaire (ZI) du côté du récepteur.

12. Récepteur (RE) pour recevoir sans fil un signal d'information supplémentaire (ZI) émis par un émetteur (TR-ZI) et un signal d'information primaire (PI) émis par un autre émetteur (TR1, TR2), **caractérisé en ce que** le signal d'information supplémentaire (ZI) est disposé dans un intervalle de garde du signal d'information primaire (PI).

13. Récepteur (RE) selon la revendication 12, le récepteur (RE) étant configuré pour traiter un signal auxiliaire du signal d'information supplémentaire (ZI) dans l'intervalle de garde du signal d'information primaire (PI), le signal auxiliaire étant conçu de manière à améliorer la déduction, la détection ou le traitement du signal d'information supplémentaire (ZI) du côté du récepteur.

14. Récepteur (RE) selon la revendication 12 ou 13, dans lequel le signal d'information supplémentaire (ZI) et le signal d'information primaire (PI) sont situés sensiblement dans la même gamme de fréquences, en particulier sont spécifiés selon un système basé sur l'OFDM, une norme DVB-T, une norme LTE, une norme WiFi/WLAN ou une norme DAB.

15. Récepteur (RE) selon l'une des revendications 12 à 14, le récepteur (RE) présentant un commutateur pour sélectionner le signal d'information supplémentaire (ZI) et/ou le signal d'information primaire (PI), le commutateur étant réalisé au moins partiellement à partir d'éléments matériels et/ou d'éléments logiciels, en particulier sous la forme d'un commutateur virtuel, et le récepteur étant en particulier un téléviseur, un téléviseur intelligent, un téléviseur Hbb, un téléphone, un téléphone mobile, un téléphone intelligent, une montre intelligente, un ordinateur portable, une tablette électronique ou une radio.

16. Procédé pour recevoir un signal d'information supplémentaire (ZI) transmis sans fil, le procédé comprenant les étapes suivantes :
- réception et déduction du signal d'information supplémentaire (ZI) émis par un premier émetteur (TR-ZI) et d'un signal d'information primaire (PI) transmis sans fil par un deuxième émetteur (TR1, TR2), le signal d'information supplémentaire (ZI) étant disposé dans un intervalle de garde du signal d'information primaire (PI),
- détection et traitement du signal d'information supplémentaire (ZI) et/ou du signal d'information primaire (PI).

17. Procédé selon la revendication 16, le procédé comprenant en outre l'étape suivante :
- réception et traitement d'un signal auxiliaire, le signal auxiliaire étant associé au signal d'information supplémentaire (ZI) et étant disposé dans l'intervalle de garde du signal d'information primaire (PI) afin d'améliorer la déduction, la détection ou le traitement du signal d'information supplémentaire (ZI).

18. Procédé selon la revendication 16 ou 17, le procédé comprenant en outre l'étape suivante :
- mise à disposition d'un commutateur pour sélectionner le signal d'information supplémentaire (ZI) et/ou le signal d'information primaire (PI) pour un traitement.

19. Produit logiciel d'ordinateur incorporé sur un support de données lisible par machine et mettant en œuvre un procédé selon l'une des revendications 7 à 11 ou 16 à 18.
